# EUROPÄISCHE PATENTSCHRIFT

(11) **EP 1 681 590 B1**
(45) Veröffentlichungstag und Bekanntmachung des Hinweises auf die Patenterteilung: **10.02.2010**
(21) Anmeldenummer: 05027129.5
(22) Anmeldetag: 12.12.2005
(51) Int. Cl.: G02B 21/26

(54) **Hubtisch**
Lift table
Table élévatrice

(30) Priorität: 17.01.2005 DE 102005002309
(43) Veröffentlichungstag der Anmeldung: 19.07.2006
(73) Patentinhaber: Leica Microsystems CMS GmbH, 35578 Wetzlar (DE)
(72) Erfinder: Seifert, Roland, 34134 Kassel (DE); Kress, Claus, 69151 Neckargemünd (DE)
(74) Vertreter: Naumann, Ulrich

(56) Entgegenhaltungen:
- EP-A- 1 182 485
- DE-A1- 19 650 392
- US-A- 5 374 556
- "Catalog 2003" 2003, LINOS , GÖTTINGEN , XP002369933 * Seite T40 - Seite T41 *

## Beschreibung

Die vorliegende Erfindung betrifft einen Fokussiertisch für ein Mikroskop, mit einem Trägerrahmen und einer am Trägerrahmen angelenkten, das Objekt tragenden Objektplatte, wobei die Objektplatte über eine Parallelgelenkanordnung an dem Trägerrahmen angelenkt und gegenüber dem Trägerrahmen verkippungsfrei anhebbar oder absenkbar ist.

In der regulären Mikroskopie wird die Fokuslage des Objekts über den Fokustrieb des Mikroskops eingestellt. Die mit den dort eingebauten Motoren - in der Regel DC-Motoren - erreichbaren Positioniergenauigkeiten liegen bei plus/minus 50 nm. Solche Werte sind jedoch um mehr als den Faktor zwei zu schlecht, so dass eine derartige Fokussierung nicht zu gebrauchen ist. Häufig werden auch externe Schrittmotoren an den Feinfokustrieb des Mikroskops angeflanscht. Durch entsprechende Untersetzungen lassen sich dann zwar feine Schritteinteilungen erreichen, jedoch ist die freie Positionierbarkeit externer oder interner Getriebe ganz erheblich eingeschränkt.

Aus der Praxis sind auch bereits getriebefreie Direktantriebe bekannt. Mit solchen Direktantrieben werden Positioniergenauigkeiten im Nanometerbereich erreicht. Der verfügbare Verfahrweg ist jedoch auf wenige 100 µm begrenzt. Hinzu kommt die weitere Problematik, dass ein solcher Direktantrieb nur jeweils ein Objektiv bewegt, welches dann weit über die anderen Objektive herausragt.

Ebenfalls aus der Praxis sind piezoaktiv bewegbare Z-Tische bekannt. Die Verfahrbereiche solcher Z-Tische sind durch die Piezos eingeschränkt. Piezosysteme sind darüber hinaus durch die erforderlichen externen Meßsysteme und die ebenfalls erforderlichen Hochspannungsansteuerungen teuer. Mit der Piezoansteuerung werden bereits nahezu beliebige Z-Scanraten erreicht. Gleichförmig schnelle und auch sehr langsame Z-Scanraten, so z.B. 1.000 µm pro Sekunde bis 0,01 µm pro Sekunde. Geschwindigkeitstoleranzen von weniger als plus/minus 0,5% sind jedenfalls mit getriebemotorischen Mitteln nur äußerst schwierig zu erreichen.

Weiter aus der Praxis sind seit Jahren Z-Tische mit einer galvanometrisch angetriebenen Kipp-Platte bekannt. Der Nachteil einer solchen Anordnung liegt jedoch darin, dass bei größeren Hubbewegungen zwangsweise mit dem Hub eine Lateralbewegung des Objekts stattfindet. Liegt das zu beobachtende Objekt in der Ebene des Drehpunktes der Kipp-Platte, so ist der Fehler, der durch die Lateralbewegung entsteht, vernachlässigbar klein. Bei von der Drehpunktebene weiter entfernten Objekten oder Objektbereichen wird dieser Fehler jedoch sehr schnell mit der Entfernung unerträglich groß.

Aus der DE-AS 20 53 020 ist ein Präzisions-Objektivtisch für ein optisches Mikrokop bekannt. Die das Objekt tragende Objektplatte ist dort innerhalb eines Rahmens angeordnet und kann zur Feineinstellung relativ zu dem Rahmen in senkrechter Richtung verstellt werden. Um die dazu erforderliche Hubbewegung der Objektplatte realisieren zu können, ist diese über insgesamt vier Bandscharniere am Rahmen abgestützt. Über einen Antrieb lässt sich die Objektplatte gegenüber dem Rahmen senkrecht verlagern, wobei das Ausmaß dieser Verlagerung bzw. Bewegung der Objektplatte durch die Länge und Elastizität der Bandschamiere vorgegeben ist. Um eine gleichmäßige Hubbewegung der Objektplatte - ohne Verkippen der Obektplatte - gewährleisten zu können, ist ein aufwendiger Stellmechanismus vorgesehen, der über unter der Objektplatte angeordnete Hebel und Druckteile die Objektplatte beidseitig synchron anhebt, und zwar im Umfange der über die Bandschamiere möglichen Hubbewegung. Der zur Realisierung des Parallelhubs erforderliche Antrieb ist aufwendig und beansprucht einen erheblichen Raum.

Aus der US 48 93 914 ist eine Prüfstation für Halbleiterchips oder dergleichen bekannt, wobei diese Prüfstation ein Mikroskop sowie einen Feinfokussiertisch mit einer das Objekt tragenden Objektplatte umfasst. Die Objektplatte ist tellerförmig ausgebildet und lässt sich über eine zylindrische Führung vertikal verstellen. Ein Kippfehler der Objektplatte ist aufgrund eines zwangsweise auftretenden Spiels in der Führung unvermeidbar.

Die DD 02 24 415 A1 zeigt eine Vorrichtung zum Anheben eines Objekts an eine Referenzebene, wobei diese Vorrichtung in optischen Geräten Anwendung findet. Das Objekt liegt auf drehbar gelagerten Hebeln auf und wird über mechanische Koppelglieder unabhängig voneinander arbeitender Hubsysteme an die Referenzebene angehoben. Zwei voneinander unabhängige Hubsysteme heben eine Trägerplatte mit dort mittig angeordnetem Lager an. Ein dort gelagerter zweiseitiger Hebel wirkt über in den Eckbereichen angeordnete Auflagen unmittelbar auf das Objekt bzw. die Objektplatte, die wiederum gegen Anschläge fährt. Ein Verkippen des Objekts bzw. der Objektplatte erfolgt dort zwangsweise solange, bis das Objekt an den Anschlägen zur Anlage kommt. Wollte man dort ein Verkippen des Objekts bzw. der Objektplatte während des Vertikalhubs vermeiden, müssten die beiden unabhängig voneinander arbeitenden Antriebe synchronisiert und müsste das Objekt bzw. die Objektplatte oder die Trägerplatte kippfrei geführt sein. Dies ist konstruktiv aufwendig.

Aus der DE 196 50 392 A1 ist ein Fokussiertisch für ein Mikroskop bekannt, bei dem eine Parallelgelenkanordnung vorgesehen ist. Die Parallelgelenke bilden gleichzeitig den Rahmen, so dass sich eine wenig stabile Konstruktion ergibt. Außerdem verbleibt ein nur äußerst kleiner Bereich als Halterung für die Objektplatte, so dass eine Anlenkung an ein Mikroskop in Ermangelung einer hinreichend großen Auflagefläche problematisch ist. Des Weiteren erstreckt sich bei dem bekannten Fokussiertisch die Parallelgelenkanordnung über den gesamten Bereich der Objektplatte hinweg, so dass ein nahezu allseitiger Freiraum zum Heben und Senken des Fokussiertischs erforderlich ist. Schließlich weist der gattungsbildende Fokussiertisch ein ganz besonderes Problem dahingehend auf, dass aufgrund der dort realisierten Parallelgelenkanordnung eine Richtungskomponente in Y-Richtung entsteht, so dass in Y-Richtung entsprechend der im Gelenk vollzogenen Drehung ein zumindest geringfügiger Versatz beim Heben und Senken der Objektplatte stattfindet.

Aus "Catalog 2003" 2003, LINOS, GÖTTINGEN, XP 0023679933 ist ein Hubtisch mit einer Grundplatte und einer Objektplatte bekannt. Hebemittel erstrecken sich zwischen der Grundplatte und der Objektplatte im Sinne scherenartiger Elemente. Ein die Objektplatte umgebender Trägerrahmen ist nicht vorgesehen. Des Weiteren ist hier nachteilig, dass der Hubtisch aufgrund der zwischen Grundplatte und Objektplatte angeordneten Hubmittel äußerst hoch bzw. dick baut. Somit lässt sich der bekannte Hubtisch in keiner Weise als Fokussiertisch verwenden, nämlich in Ermangelung eines hinreichenden Platzes zur Anordnung eines solchen Hubtischs unter dem Objektiv bzw. dem Objektivrevolver eines Mikroskops.

Aus EP 1 182 485 A ist eine Vorrichtung zum Verstellen der Lage zweier Bauelemente zueinander bekannt. Dabei geht es darum, dass die Bauelemente über eine Krafteinwirkung zueinander verstellbar sind, wobei ganz besondere Gelenk- und Hebelanordnungen vorgesehen sind.

Die US 5 374 556 A zeigt für sich gesehen einen Hubmechanismus mit flexiblen Federelementen. Dieser Hubtisch ist aufgrund seiner Bauweise nicht Fokussiertisch geeignet.

Der vorliegenden Erfindung liegt daher die Aufgabe zugrunde, einen Fokussiertisch der gattungsbildenden Art derart auszugestalten und weiterzubilden, dass bei einfacher und dennoch hinreichend stabiler Konstruktion weder in X-Richtung noch in Y-Richtung ein Versatz der Objektplatte stattfindet.

Der erfindungsgemäße Fokussiertisch löst die voranstehende Aufgabe durch die Merkmale des Patentanspruchs 1. Danach ist der eingangs genannte Fokussiertisch dadurch gekennzeichnet, dass die Parallelgelenkanordnung Parallelgelenke umfasst und dass die Parallelgelenke eine Traverse mit dem Trägerrahmen und die Traverse mit der Objektplatte verbinden, dass die Parallelgelenkanordnung zwei Paar Parallelgelenke umfasst, wobei das eine Paar der Parallelgelenke die Traverse mit dem Trägerrahmen und das andere Paar der Parallelgelenke die Traverse mit der Objektplatte verbindet, dass die Paare der Parallelgelenke auf einer Seite des Trägerrahmens angeordnet sind , so dass der Trägerrahmen die Objektplatte im Wesentlichen auf drei Seiten umgibt, um die Objektplatte nahezu insgesamt in den Trägerrahmen zu integrieren.

Erfindungsgemäß ist erkannt worden, dass man einen Fokussiertisch der gattungsbildenden Art mit einfachen konstruktiven Mitteln derart ausgestalten kann, dass ein Versatz in Y-Richtung in Bezug auf die das Objekt tragende Objektplatte nicht stattfindet bzw. kompensiert wird. Dazu sind ganz besondere Parallelgelenke vorgesehen, wobei die Parallelgelenke eine Traverse mit dem Trägerrahmen und die Traverse mit der Objektplatte verbinden. Mit anderen Worten greifen die Parallelgelenke am starren, von den Parallelgelenken unabhängigen Trägerrahmen an, so dass die Traverse über die Parallelgelenke mit dem Trägerrahmen verbunden ist. An der Traverse ist wiederum die Objektplatte angelenkt, nämlich ebenfalls über Parallelgelenke, so dass die Parallelgelenkanordnung zwei Gruppen von Parallelgelenken umfasst. Ein Y-Versatz der einen Gruppe von Parallelgelenken wird durch den Y-Versatz der anderen Gruppe von Parallelgelenken kompensiert, so dass die Objektplatte beim Heben und Senken keinem Y-Versatz in Bezug auf den Trägerrahmen unterzogen wird.

Für den erfindungsgemäßen Fokussiertisch ist wesentlich, dass die Objektplatte in der abgesenkten Stellung, d. h. im Ruhezustand, von dem Trägerrahmen im Wesentlichen auf drei Seiten umgeben ist. Mit anderen Worten ist die Objektplatte durch den Trägerrahmen regelrecht eingefasst, wodurch sich eine ganz besonders stabile Ausführung des Fokussiertisches ergibt. Außerdem baut der erfindungsgemäße Fokussiertisch äußerst flach, da nämlich der Trägerrahmen die Objektplatte umgibt. Mit anderen Worten befindet sich die Objektplatte innerhalb des Trägerrahmens. Die Parallelgelenkanordnung ist abseits des Trägerrahmens angeordnet, nämlich auf der offenen Seite des Trägerrahmens, auf der die Parallelgelenkanordnung Parallelgelenke umfasst. Die Verbindung zum Rahmen und zur Objektplatte ist dadurch hergestellt, dass die Parallelgelenke eine Traverse mit dem Trägerrahmen und die Traverse mit der Objektplatte verbinden.

Es sei darauf hingewiesen, dass in erfindungsgemäßer Weise die Parallelgelenke auf einer Seite angeordnet sind, so dass der Trägerrahmen mit seinen starren Bestandteilen als bauliche Einheit die Objektplatte von drei Seiten her umgibt. Dadurch ergibt sich eine besonders stabile Ausgestaltung des Fokussiertisches, wobei ein verkippungsfreies Heben und Senken der Objektplatte möglich ist, ohne dass dabei ein Y-Versatz der Objektplatte, d. h. ein Y-Versatz der Objektplatte gegenüber dem Trägerrahmen, stattfindet.

Die Parallelgelenkanordnung umfasst zwei Paar Parallelgelenke, wobei das eine Paar der Parallelgelenke die Traverse mit dem Trägerrahmen und das andere Paar der Parallelgelenke die Traverse mit der Objektplatte verbindet. Folglich ist der Trägerrahmen unabhängig von der Parallelgelenkanordnung fest ausgebildet und erstreckt sich die Parallelgelenkanordnung von dem Trägerrahmen aus unter Einbeziehung der Traverse zwischen dem Trägerrahmen und der Objektplatte. Für die Hubbewegung ist demnach die Parallelgelenkanordnung unter Einbeziehung der Traverse verantwortlich, wobei die Traverse zur Richtungsänderung in Y-Richtung dient, so dass sich die Y-Richtungskomponenten beider Paare der Parallelgelenke in idealer Weise kompensieren. Bei gleicher Auslenkung der beiden Paare der Parallelgelenke sind die Kreisbewegungen in den Biegestellen die gleichen, so dass mit einfachen Mitteln eine Kompensation in Y-Richtung realisiert ist.

In weiter vorteilhafter Weise sind die Parallelgelenke derart angeordnet und ausgebildet, dass das eine Paar äußere Parallelgelenke und das andere Paar innere Parallelgelenke bildet. Dabei ist es von weiterem Vorteil, wenn die Parallelgelenke - paarweise - nebeneinander angeordnet sind, wobei sich zwischen den Parallelgelenken starre Rahmenteile des Trägerrahmens erstrecken können. Die Stabilität der Anordnung ist dadurch abermals begünstigt.

Im Konkreten verbinden die äußeren Parallelgelenke die Traverse mit dem Trägerrahmen und die inneren Parallelgelenke die Traverse mit der Objektplatte. Eine umgekehrte Anordnung ist ebenfalls denkbar, wonach die inneren Parallelgelenke die Traverse mit dem Trägerrahmen und die äußeren Parallelgelenke die Traverse mit der Objektplatte verbinden.

Im Rahmen einer Variante sind die Paare der Parallelgelenke auf einer Seite des Trägerrahmens angeordnet, so dass der Trägerrahmen mit seinen starren Bestandteilen als bauliche Einheit die Objektplatte zumindest von drei Seiten her umgibt. Gemäß einer weiteren Variante sind die Paare der Parallelgelenke auf gegenüberliegenden Seiten des Trägerrahmens angeordnet bzw. erstrecken sich von einer Seite auf die andere Seite des Trägerrahmens vorzugsweise seitlich.

Die Parallelgelenke können derart ausgebildet sein, dass sie sich zumindest paarweise parallel zueinander erstrecken, wobei - wie bereits zuvor erwähnt - feste Rahmenteile dazwischen angeordnet sein können. Aufgrund der parallelen Anordnung verlaufen die Drehachsen der Parallelgelenke allesamt parallel zueinander, wodurch sich in besonders einfacher Weise eine Kompensation des Y-Versatzes ergibt.

Eine Kompensation des Y-Versatzes wird auch dadurch begünstigt, dass die Parallelgelenke so angeordnet, sind, dass sie beim Heben oder Senken der Objektplatte paarweise in entgegengesetzte Richtung biegen, nämlich zum einen gegenüber dem Trägerrahmen in Richtung des Trägerrahmens und zum anderen gegenüber der Traverse in eine Richtung entgegengesetzt der ersten Drehrichtung, d.h. vom Trägerrahmen abgewandt. Der zum Trägerrahmen hin entstehende Y-Versatz wird durch die Drehung gegenüber der Traverse mit einem entsprechenden Y-Versatz in entgegengesetzte Richtung kompensiert.

In weiter vorteilhafter Weise sind die Parallelgelenke als so genannte Festkörpergelenke ausgeführt, d.h. es handelt sich hier um Parallelgelenke mit definierten Biegestellen und nicht etwa mit Scharnieren oder dergleichen. Eine solche Ausgestaltung hat den Vorteil, dass diese Gelenke spielfrei arbeiten, wobei sich die Objektplatte parallel zum Trägerrahmen - ohne Y-Versatz - bewegt. Eine Richtungskomponente in X-Richtung entsteht durch Vorkehrung der Festkörpergelenke grundsätzlich nicht.

Im Rahmen einer besonders bevorzugten Ausgestaltung weist jedes Parallelgelenk zwei parallel zueinander verlaufende Schenkel auf, die beidseitig über Biegestellen mit dem Trägerrahmen, der Traverse und der Objektplatte - unmittelbar oder mittelbar - verbunden sind. Beim Anheben oder Senken der Objektplatte gegenüber dem Trägerrahmen findet eine Biegung verjüngter Bereiche in den Biegestellen statt, wobei sich die Schenkel eines jeden Parallelgelenks parallel zueinander verschieben. Dadurch ist die Lage der Objektplatte gegenüber dem Trägerrahmen stabil, und zwar in paralleler Anordnung. Ein verkippungsfreies Heben und Senken der Objektplatte ist somit möglich, ohne dass dabei ein Y-Versatz der Objektplatte, d.h. ein Y-Versatz der Objektplatte gegenüber dem Trägerrahmen, stattfindet.

Des Weiteren ist es denkbar, dass die Schenkel der Parallelgelenke über die Biegestellen jeweils in einen Lagerblock münden, der den jeweiligen Bauteilen - Trägerrahmen, Objektplatte oder Traverse - zugeordnet oder mit diesen verbunden ist. Der Lagerblock dient somit zum Verbinden der Parallelgelenke - über deren Biegestellen - mit dem jeweiligen Bauteil.

In weiter vorteilhafter Weise sind die Parallelgelenke zumindest eines der beiden Paare identisch ausgeführt. Damit eine Kompensation eines Versatzes in Y-Richtung auch tatsächlich stattfindet, ist es von weiterem Vorteil, wenn die Parallelgelenke beider Paare identisch ausgeführt sind. Mechanismen zur Über-/Untersetzung sind dann nicht erforderlich.

Im Rahmen der voranstehend erörterten Merkmale bietet es sich an, dass die Objektplatte nahezu insgesamt in den Trägerrahmen integriert ist. Dies bedeutet, dass der Trägerrahmen die Objektplatte im Wesentlichen auf drei Seiten umgibt, so dass über den Trägerrahmen eine sichere Anordnung an einem Gestellt und eine Fixierung der gesamten Anordnung möglich ist. Die Objektplatte ist dabei mehr oder weniger als Ausschnitt aus dem Trägerrahmen zu verstehen, wobei sich dieser Ausschnitt gegenüber dem Trägerrahmen absenken und/oder anheben lässt, und zwar lediglich unter Beschreibung einer Bewegung in Z-Richtung. Eine Richtungskomponente in X-Richtung entsteht nicht, während eine Richtungskomponente in Y-Richtung aufgrund der besonderen Anordnung der Parallelgelenke kompensiert ist.

In weiter vorteilhafter Weise umfasst die Objektplatte eine Aufnahmeeinrichtung für Proben oder für einen Probenhalter. Ebenso ist es denkbar, dass die Objektplatte eine Aufnahmeeinrichtung für Proben oder einen Probenhalter als integrale Bestandteile umfasst.

Sofern der Hubtisch als Fokussiertisch für ein Mikroskop dient, könnte damit im Auflichtung oder im Durchlicht gearbeitet werden. Zur Realisierung von Durchlichtanwendungen ist in der Objektplatte vorzugsweise mittig ein Durchgang ausgebildet, wobei dies im Bereich der Aufnahmeeinrichtung für Proben bzw. im Bereich des Probenhalters vorgesehen ist.

Zum Heben und Senken der Objektplatte ist in weiter vorteilhafter Weise ein Antrieb vorgesehen, wobei es sich dabei grundsätzlich um einen mechanischen Antrieb mit Handbetätigung handeln kann. Der Antrieb kann ein- oder mehrstufig ausgeführt sein. In vorteilhafter Weise handelt sich bei dem Antrieb um einen Galvanometerantrieb, der sich insbesondere auch zur Feineinstellung eignet.

In konstruktiver Hinsicht ist es von ganz besonderem Vorteil, wenn sich der Antrieb - vorzugsweise mit seinem starren Teil - an einem Gestellt oder am Trägerrahmen abstützt und mit seinem angetriebenen Teil gegen die Traverse oder die Objektplatte wirkt. Der Antrieb kann dabei so ausgelegt sein, dass er entweder die Objektplatte in Bewegungsrichtung drückt oder die Objektplatte in Bewegungsrichtung zieht. Hinsichtlich möglicher Antriebe sei auf den eingangs umfänglich genannten Stand der Technik verwiesen, dem sich unterschiedliche Antriebsarten und Mechanismen zur Verwendung bei dem erfindungsgemäßen Fokussiertisch entnehmen lassen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigen
- Fig. 1: eine schematische Ansicht eines ersten Ausführungsbeispiels eines erfindungsgemäßen Fokussiertisch und
- Fig. 2: den Gegenstand aus Figur 1 in einer schematischen Seitenansicht.

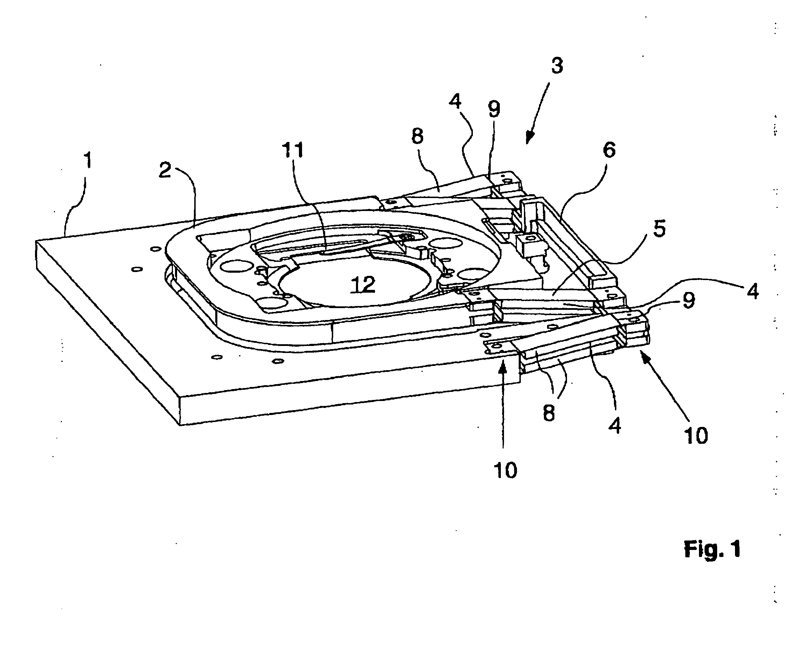

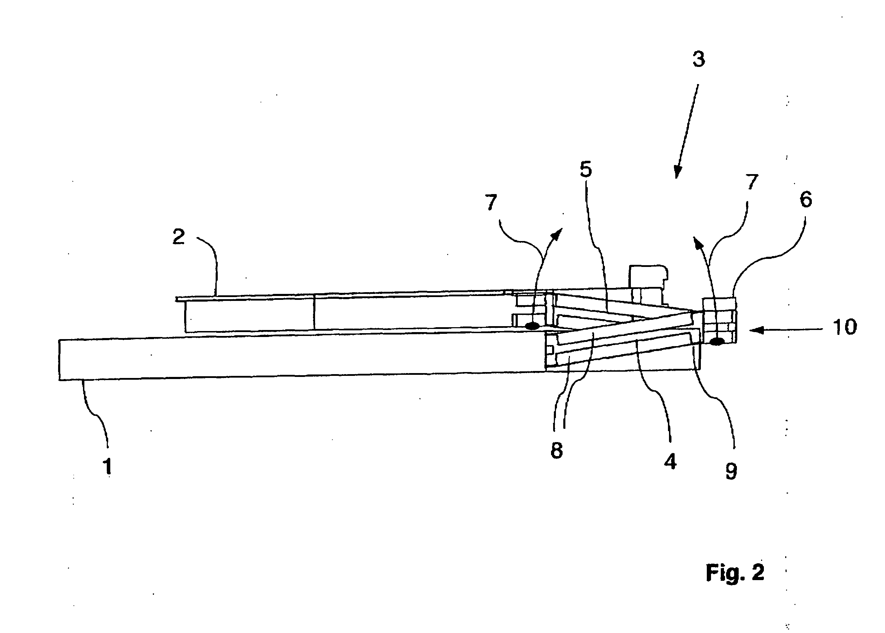

Die Fig. 1 und 2 zeigen gemeinsam ein Ausführungsbeispiel eines erfindungsgemäßen Fokussiertischs. Der Fokussiertisch umfasst einen Trägerrahmen 1 und eine am Trägerrahmen 1 angelenkte, das Objekt tragende Objektplatte 2. Die Objektplatte 2 ist über eine Parallelgelenkanordnung 3 an dem Trägerrahmen 1 angelenkt und gegenüber dem Trägerrahmen 1 verkippungsfrei anhebbar oder absenkbar.

Die Parallefgelenkanordnung 3 umfasst einzelne Parallelgelenke 4, 5, wobei die Parallelgelenke 4 eine Traverse 6 mit dem Trägerrahmen 1 und die Parallelgelenke 5 die Traverse 6 mit der Objektplatte 2 verbinden.

Aufgrund einer solchen Anordnung unter Zwischenschaltung der Traverse 6 lassen sich Richtungskomponenten in Y-Richtung kompensieren, so dass die Objektplatte 2 lediglich in Z-Richtung gegenüber dem Trägerrahmen 1 hebbar und senkbar ist.

Die Fig. 1 und 2 zeigen des Weiteren, dass die Parallelgelenkanordnung 3 zwei Paare der Parallelgelenke 4 und 5, umfasst, wobei das eine Paar der Parallelgelenke 4 die Traverse 6 mit dem Trägerrahmen 1 und das andere Paar der Parallelgelenke 5 die Traverse 6 mit der Objektplatte 2 zwei verbindet.

Fig. 1 zeigt besonders deutlich, dass das eine Paar äußere Parallelgelenke 4 und das andere Paar innere Parallelgelenke 5 bildet.

Beide Paare der Parallelgelenke 4, 5 sind auf einer Seite des Trägerrahmens 1 angeordnet, wobei sich die Parallelgelenke 4, 5 paarweise parallel zueinander erstrecken und wobei die Paare der Parallelgelenke 4, 5 ebenfalls zueinander parallel verlaufen.

In Fig. 2 ist durch die dort eingezeichneten Pfeile 7 angedeutet, dass die Parallelgelenke 4, 5 derart ausgebildet und angeordnet sind, dass sie paarweise in entgegengesetzte Richtungen biegen, wobei die Pfeile 7 die Kreisbewegung eines Punktes auf der Probenebene und auf einer Zwischenebene des jeweiligen Parallelgelenks darstellen.

Jedes der Parallelgelenke 4, 5 umfasst zwei parallel zueinander verlaufende Schenkel 8, die beidseitig über Biegestellen 9 mit dem Trägerrahmen 1, der Traverse 6 und der Objektplatte 2 verbunden sind. Beim Biegen der Biegestellen 9 verschieben sich die Schenkel 8 parallel zueinander. Außerdem sind die Schenkel 8 der Parallelgelenke 4, 5 über die Biegestellen 9 in einem Lagerblock 10 verbunden, der den jeweiligen Bauteilen zugeordnet bzw. mit diesen verbunden ist.

Die Figuren zeigen des Weiteren, dass die Parallelgelenke 4, 5 identisch ausgeführt sind, so dass eine Kompensation der Bewegungskomponente in Y-Richtung mit einfachen Mitteln realisiert ist.

Die Figuren zeigen des Weiteren, dass der Trägerrahmen 1 die Objektplatte 2 im Wesentlichen auf drei Seiten umgibt, wobei die Objektplatte 2 als eine Art Ausschnitt aus dem Trägerrahmen 1 ausgeführt ist.

Die Objektplatte 2 umfasst des Weiteren eine Aufnahmeeinrichtung 11 für Proben oder Probenhalter. Des Weiteren hat die Objektplatte 2 einen mittigen Durchgang 12 für Durchlichtanwendungen.

In Bezug auf den Antrieb, der sich den Figuren nicht entnehmen lässt, sei zur Vermeidung von Wiederholungen auf den allgemeinen Teil der Beschreibung verwiesen.

Abschließend sei ganz besonders darauf hingewiesen, dass das voranstehend erörterte Ausführungsbeispiel lediglich zur Beschreibung der beanspruchten Lehre dient, diese jedoch nicht auf das Ausführungsbeispiel einschränkt.

## Patentansprüche

1. Fokussiertisch für ein Mikroskop, mit einem Trägerrahmen (1) und einer am Trägerrahmen (1) angelenkten, das Objekt tragenden Objektplatte (2), wobei die Objektplatte (2) über eine Parallelgelenkanordnung (3) an dem Trägerrahmen (1) angelenkt und gegenüber dem Trägerrahmen (1) verkippungsfrei anhebbar oder absenkbar ist,
**dadurch gekennzeichnet, dass** die Parallelgelenkanordnung (3) Parallelgelenke (4, 5) umfasst und dass die Parallelgelenke (4, 5) eine Traverse (6) mit dem Trägerrahmen (1) und die Traverse (6) mit der Objektplatte (2) verbinden, dass die Parallelgelenkanordnung (3) zwei Paar Parallelgelenke (4, 5) umfasst, wobei das eine Paar der Parallelgelenke (4) die Traverse (6) mit dem Trägerrahmen (1) und das andere Paar der Parallelgelenke (5) die Traverse (6) mit der Objektplatte (2) verbindet, dass die Paare der Parallelgelenke (4, 5) auf einer Seite des Trägerrahmens (1) angeordnet sind, so dass der Trägerrahmen (1) die Objektplatte (2) im Wesentlichen auf drei Seiten umgibt, um die Objektplatte nahezu insgesamt in den Trägerrahmen (1) zu integrieren.

2. Fokussiertisch nach Anspruch 1, **dadurch gekennzeichnet, dass** das eine Paar äußere Parallelgelenke (4) und das andere Paar innere Parallelgelenke (5) bildet, wobei die äußeren Parallelgelenke (4) die Traverse (6) mit dem Trägerrahmen (1) und die inneren Parallelgelenke (4, 5) die Traverse (6) mit der Objektplatte (2) verbinden können oder wobei die inneren Parallelgelenke die Traverse mit dem Trägerrahmen und die äußeren Parallelgelenke die Traverse mit der Objektplatte

3. Fokussiertisch nach Anspruch 1 oder 2, **dadurch gekennzeichnet, dass** sich die Parallelgelenke (4, 5) zumindest paarweise parallel zueinander erstrecken und/oder dass die Parallelgelenke (4, 5) so angeordnet sind, dass sie paarweise in entgegen gesetzte Richtungen biegen und/oder dass die Parallelgelenke (4, 5) als Festkörpergelenke ausgeführt sind.

4. Fokussiertisch nach einem der Ansprüche 1 bis 3, **dadurch gekennzeichnet, dass** jedes Parallelgelenk (4, 5) zwei parallel zueinander verlaufende Schenkel (8) aufweist, die beidseitig über Biegestellen (9) mit dem Trägerrahmen (1), der Traverse (6) und der Objektplatte (2) verbunden sind, wobei sich die Schenkel (8) beim Biegen der Biegestellen (9) parallel zueinander verschieben können und/oder wobei die Schenkel (8) der Parallelgelenke (4, 5) über die Biegestellen (9) in einen Lagerblock (10) münden können, der den jeweiligen Bauteilen zugeordnet oder mit diesen verbunden ist.

5. Fokussiertisch nach einem der Ansprüche 1 bis 4, **dadurch gekennzeichnet, dass** die Parallelgelenke (4, 5) eines der beiden Paare identisch ausgeführt sind und/oder dass die Parallelgelenke (4, 5) beider Paare identisch ausgeführt sind.

6. Fokussiertisch nach einem der Ansprüche 1 bis 5, **dadurch gekennzeichnet, dass** die Objektplatte (2) als Ausschnitt aus dem Trägerrahmen (1) ausgeführt ist und/oder dass die Objektplatte (2) eine Aufnahmeeinrichtung (11) für Proben oder Probenhalter umfasst und/oder dass die Objektplatte (2) einen vorzugsweise mittigen Durchgang (12) aufweist.

7. Fokussiertisch nach einem der Ansprüche 1 bis 6, **gekennzeichnet durch** einen Antrieb, der sich an einem Gestell oder am Trägerrahmen (1) abstützt und gegen die Traverse (6) oder die Objektplatte (2) wirkt, wobei der Antrieb ein- oder mehrstufig ausgeführt ist und/oder als Galvanometerantrieb ausgeführt sein kann.

## Claims

1. A focusing table for a microscope, having a supporting frame (1) and an object plate (2) hinged on the supporting frame (1) and bearing the object, the object plate (2) being hinged on the supporting frame (1) by way of a parallel-action joint arrangement (3) and being arranged to be raised or lowered with respect to the supporting frame (1) without tilting, **characterised in that** the parallel-action joint arrangement (3) comprises parallel-action joints (4, 5) and **in that** the parallel-action joints (4, 5) connect a cross member (6) with the supporting frame (1) and the cross member (6) with the object plate (2), **in that** the parallel-action joint arrangement (3) comprises two pairs of parallel-action joints (4, 5), wherein the one pair of the parallel-action joints (4) connects the cross member (6) with the supporting frame (1) and the other pair of the parallel-action joints (5) connects the cross member (6) with the object plate (2), **in that** the pairs of parallel-action joints (4, 5) are arranged on one side of the supporting frame (1) so that the supporting frame (1) surrounds the object plate (2) substantially on three sides in order to integrate the object plate (2) virtually entirely into the supporting frame (1).

2. A focusing table according to claim 1, **characterised in that** the one pair forms outer parallel-action joints (4) and the other pair forms inner parallel-action joints (5), wherein the outer parallel-action joints (4) can connect the cross member (6) with the supporting frame (1) and the inner parallel-action joints (4, 5) can connect the cross member (6) with the object plate (2), or wherein the inner parallel-action joints can connect the cross member with the supporting frame and the outer parallel-action joints can connect the cross member with the object plate.

3. A focusing table according to claim 1 or 2, **characterised in that** the parallel-action joints (4, 5) extend at least in pairs parallel to one another and/or the parallel-action joints (4, 5) are so arranged that they bend in pairs in opposite directions and/or the parallel-action joints (4, 5) are in the form of fixed body joints.

4. A focusing table according to any one of claims 1 to 3, **characterised in that** each parallel-action joint (4, 5) comprises two limbs (8) running parallel to one another, which are connected at both ends via bending points (9) to the supporting frame (1), the cross member (6) and the object plate (2), wherein the limbs (8) are able to move parallel to one another when the bending points (9) flex and/or wherein the limbs (8) of the parallel-action joints (4, 5) can merge via the bending points (9) into a bearing block (10), which is associated with the particular components or is connected to them.

5. A focusing table according to any one of claims 1 to 4, **characterised in that** the parallel-action joints (4, 5) of one of the two pairs are of identical construction and/or **in that** the parallel-action joints (4, 5) of both pairs are of identical construction.

6. A focusing table according to any one of claims 1 to 5, **characterised in that** the object plate (2) is in the form of a cut-out of the supporting frame (1) and/or **in that** the object plate (2) comprises a receiving device (11) for samples or sample holders, and/or **in that** the object plate (2) comprises a preferably central aperture (12).

7. A focusing table according to any one of claims 1 to 6, **characterised by** a drive that is supported on a framework or on the supporting frame (1) and acts against the cross member (6) or the object plate (2), wherein the drive is of single- stage or multistage construction and/or can be constructed as a galvanometer drive.

## Revendications

1. Table de focalisation pour un microscope, comportant un châssis de support (1) et une platine objet (2) portant l'objet, articulée sur le châssis de support (1), la platine objet (2) étant articulée sur le châssis de support (1) au moyen d'un parallélogramme déformable (3) et pouvant être relevée sans basculement par rapport au châssis de support (1),
**caractérisée en ce que** le parallélogramme déformable (3) comporte des organes d'articulation parallèles (4, 5) et **en ce que** les organes d'articulation parallèles (4, 5) relient une traverse (6) au châssis de support (1) et la traverse (6) à la platine objet (2), **en ce que** le parallélogramme déformable (3) comporte deux paires d'organe d'articulation parallèles (4, 5), l'une des paires d'organe d'articulation parallèles (4) reliant la traverse (6) au châssis de support (1) et l'autre paire (5) la traverse (6) à la platine objet (2), **en ce que** les paires d'organe d'articulation parallèles (4, 5) sont disposées sur un côté du châssis de support (1) de façon que le châssis de support (1) entoure essentiellement la platine objet (2) sur trois côtés afin d'intégrer presque entièrement la platine objet (2) dans le châssis de support (1).

2. Table de focalisation selon la revendication 1, **caractérisée en ce que** l'une des paires forme les organe d'articulation parallèles extérieurs (4) et l'autre paire les organe d'articulation parallèles intérieurs (5), les organe d'articulation parallèles extérieurs (4) pouvant relier la traverse (6) au châssis de support (1) et les organe d'articulation parallèles intérieurs (5) la traverse (6) à la platine objet (2) ou les organe d'articulation parallèles intérieurs la traverse au châssis de support et les organe d'articulation parallèles extérieurs la traverse à la platine objet.

3. Table de focalisation selon la revendication 1 ou 2, **caractérisée en ce que** les organes d'articulation parallèles (4,5) s'étendent au moins par paires parallèlement entre eux et/ou que les organe d'articulation parallèles (4,5) sont disposés de telle façon qu'ils se plient par paires de manière opposée et/ou que les organe d'articulation parallèles (4,5) sont constitués par des organe d'articulation d'une seule pièce.

4. Table de focalisation selon l'une des revendications 1 à 3, **caractérisée en ce que** chaque organe d'articulation parallèle (4,5) présente deux bras (8) s'étendant parallèlement entre eux, qui sont reliés des deux côtés par des points d'articulation (9) au châssis de support (1), à la traverse (6) et à la platine objet (2), les bras (8) pouvant se mouvoir parallèlement entre eux par pliage des points d'articulation et/ou les bras (8) des organes d'articulation parallèles (4,5) pouvant arriver par les points d'articulation (9) à un bloc de palier (10) qui est associé aux pièces (9) respectives ou relié à elles.

5. Table de focalisation selon l'une des revendications 1 à 4, **caractérisée en ce que** les organes d'articulation parallèles (4,5) de l'une des deux paires sont réalisés de façon identique et/ ou que les organes d'articulation parallèles (4,5) des deux paires sont réalisés de façon identique.

6. Table de focalisation selon l'une des revendications 1 à 5, **caractérisée en ce que** la platine objet (2) est réalisée comme partie du châssis de support (1) et/ou que la platine objet (2) comprend un dispositif de saisie (11) pour des échantillons ou pour support d'échantillons et/ou que la platine objet (2) présente un trou (12) de préférence central.

7. Table de focalisation selon l'une des revendications 1 à 6, **caractérisée par** un entraînement qui s'appuie sur un bâti ou sur le châssis de support (1) et agit contre la traverse (6) ou la platine objet (2), l'entraînement étant réalisé à un ou plusieurs étages et/ou pouvant être réalisé comme entraînement de galvanomètre
